# EUROPEAN PATENT APPLICATION

(11) **EP 3 572 133 A1**
(43) Date of publication of application: **27.11.2019**
(21) Application number: 18174368.3
(22) Date of filing: 25.05.2018
(51) Int. Cl.: A63F 13/28, A63F 13/90, A63F 13/98

(54) **SYSTEM FOR ENHANCING PERCEPTION OF VIDEO GAMES**

(71) Applicant: RECARO eGaming GmbH & Co. KG, 70597 Stuttgart (DE)
(72) Inventor: Krockenberger, Oliver, 70597 Stuttgart (DE); Efstratios, Putuludis, 70597 Stuttgart (DE)
(74) Representative: Witte, Weller & Partner Patentanwälte mbB

(57) **Abstract**

It is disclosed a system (50) for boosting perception of an image (18) of a video game, in a color-dependent and/or brightness-dependent manner, which video game runs on an external data-processing unit (16), wherein the image (18) of the video game is displayed to a gamer (12) of the video game within a room (20) via an external display device (14) connected to the external data-processing unit (16) for exchanging data.

## Description

The present invention relates to a system and method for enhancing and boosting perception of a video game, in particular dependent on at least one of color and brightness of an image displayed to a video gamer. In particular, the present invention relates to a (gaming) seat being part of a corresponding system.

The present invention is directed to a group of ambitious gamers and e-sportsmen. This circle spends a significant amount of time with playing video games, in particular online games.

For enhancing gamers' perception of the video game, a plurality of different concepts already has been proposed.

For example, TV screens generating a so-called "ambient light", are exemplarily described in WO 2008/081387 A1, wherein the TV screen is provided with rear light sources for illuminating a wall behind the TV screen. By automatically controlling the color of the illumination light to match the color of the video image, the ambient light offers a more immersive viewing experience to the viewer. One version of a corresponding ambient light TV screen provides illumination of the left and right (rear) side with one color for each side. Younger generations are fitted with additional top and bottom light sources, but still with one color for each side.

General gaming seats are exemplarily disclosed in CN 206933816 U, CN 206994951 U, and TW N544254 U. Usually, gaming seats comprise a seating, a seat back, a head rest, left and right arm rests, a recliner, and a foot rest. The arm rests may be adjustable. The gaming seat may be provided with a light module (cf. TW'254 U) such as a light bar is sewed to an outer edge of the back rest.

WO 2017/029103 A1 discloses lighting for video games. In particular, a lighting controller is disclosed for controlling illumination emitted by one or more (standalone) luminaries to accompany a video game. When a first event occurs during gameplay, the controller receives an indication of an identified type of the first event from amongst a set of pre-defined event types, and, based on these types, controls the illumination to produce a first lighting effect to accompany the first event during the gameplay phase. An effect-triggering event in the video game might be: an explosion, a gunshot, a fire, a crash, presence of an enemy, player taking damage, player increasing in health, and the like. When a second of the same type occurs in a non-gameplay phase of the video game, the controller receives an indication of this as well. Based on identifying that the events are of the same type, but that the video game is in the non-gameplay phase rather than the gameplay phase, the controller controls the illumination to produce a second lighting effect to accompany the occurrence of the second event during the non-gameplay phase, wherein this effect is visibly distinct (e.g., more intense) from the first lighting effect.

In view of these know techniques, it is an object of the present invention to enhance, particularly the visual, perception of the video game, in particular during the gameplay, i.e. in real time, without disturbing the gamer.

According to an aspect of the invention, it is disclosed a system for a boosting perception of a video game, dependent on color and/or brightness of an image of the video-game running on an external data-processing unit, wherein the image of the video game is displayed to a gamer of the video game within a room via an external display device connected to the external data-processing unit for exchanging data (i.e. video signal), wherein the system comprises: a seat; a, preferably energy self-sufficient, illumination unit including at least one luminaire, wherein the illumination unit is integrated into the gaming seat, in particular into a head rest of the seat, wherein the illumination unit is configured to illuminate both a main field of view, in which the display device is, preferably centrally, positioned, and a peripheral field of view of the gamer, such as surrounding walls, a ceiling, and the like, in a manner which is perceptible for the gamer looking at the display device; and a control unit configured for performing the steps of: receiving, from the external data-processing unit, information on at least one of color and brightness of a current scenery of the video game; converting the received information on at least one of color and brightness (preferably in real time and in less than 15 ms) into a scenery signal for the illumination unit so that at least the peripheral field of view of the gamer is illuminated corresponding to the current scenery; and controlling the illumination unit by the scenery signal.

The perception of the video game is boosted without disturbing the game because the video-game scenery is expanded to the real world, i.e. the room in which the gamer sits. The seat emits light into the peripheral field of view of the gamer so that the gamer perceives the expanded scenery via the subconscious.

The gamer is not blinded by the light from the illumination unit because the illumination unit is positioned behind the gamer.

Even if the gamer moves its relative position to the screen, still the peripheral field of view is illuminated as the gamer will move its seat as well. The illumination unit is "fixed" to the gamer.

Preferably, the control device is further configured to perform the step of: scaling the received information on color to a color spectrum being displayable by the illumination unit.

By adjusting the color scales of the screen to the color scale of the illumination unit there will be no break between the moods generated by the screen and the illumination unit. The transition between illumination of the walls of the room and the color on the screen will be flowing, thereby further enhancing the gamer's perception of the video game.

According to another embodiment, the system further comprises an ambient-light sensor, which is configured to detect an intensity of an ambient light within the room where the illumination unit is located, wherein the control unit is further configured to perform the steps of: receiving an intensity of the ambient light by the ambient-light sensor; controlling at least one of color value and brightness value of the illumination unit based on the received intensity of the ambient light, in particular by means of a fading algorithm, so that a continuous color change at a constant light intensity is achievable, in particular during change of an ambient-light ratio in the room.

The system is able to react to changing daylight conditions. Ambient light may fall in via a door or windows. Even the screen itself is to be considered as an (external) light source which might influence the gamer's impression of the mood generated by the light emitted by the gaming seat.

In particular, the control unit is further configured to perform the following steps of: receiving information on one or more events in the video game from the external data-processing unit; and converting the information on one or more events into an effect signal, in particular for short duration instead of the scenery signal.

The system does not only support enhancement of moods, but also transports important messages to the gamer. For instance, if an enemy is approaching from the left, a red light flash may be produced in the right part of the peripheral field of view. At the same time, a friend approaching from the right might be indicated by a green light flash in the right part of the peripheral field of view. All this happens without disturbing the gamer's main focus on the screen. Nevertheless the gamer will perceive this information which might help to win the video game.

According to another preferred embodiment, at least one of the scenery signal and the effect signal respectively comprise at least one of the following control parameters: dimming target; target color, dimming duration; and dimming priority.

Transitions are fluent. The gamer does not get disturbed.

Even further, the illumination unit may comprise several luminaires, wherein each of the luminaires is controllable separately, and wherein the luminaires are orientated towards the peripheral field of view, in particular for displaying effect signals to the gamer, preferably in a spatial distinguishable manner.

Several luminaires allow an individualized illumination of the peripheral field of view. More information can be transported in the same time (e.g., each luminaire may be illuminated in a different color at the same time).

However, each of the luminaires may point to a different part of the peripheral field of view.

Still further, the scenery signal may be generated based on the information on at least one of color and brightness, and additionally based on at least one of the following parameters: height of the room, widths of the room; respective distance of the gamer relative to left, right, front and rear walls; a respective wall color; a body size of the gamer; a seat height; and a number of the luminaires.

The scenery of the video game and the size of the room may have significant influence on the way the gamer will perceive the mood and effects generated by the illumination device. For example, if the room is large settings need to be different in comparison to a small room. All this is considered by the system during generation of the mood.

Moreover, the seat may further comprise: a battery; a rechargable accumulator; a fan; an interface for the information to be received; a seating-status sensor; a temperature sensor; and an acceleration sensor.

Preferably, the control unit further comprises a gamer-programming interface for downloading gamer-generated programs.

Other objects and advantages of the disclosed system and method will be apparent from the following description, the accompanying drawings and the appended claims.
- Fig. 1: shows a schematic illustration of an environment in which a user, i.e. gamer, plays a video game;
- Fig.2: illustrates information and parameters which may influence a system for boosting the gamer's perception;
- Fig. 3: shows a block diagram of the system;
- Fig.4: is a side view of a field of view;
- Fig. 5: illustrates the gamer's view of the room of Fig. 1;
- Fig. 6: is a top view of Fig. 5 for illustrating the field of view of Fig. 4 from above;
- Fig.7: illustrates a rear view (Fig. 7A) and a sectional view (Fig. 7B) of an illumination unit;
- Fig. 8: shows a room illuminated by a gaming chair;
- Fig. 9: shows a functional block diagram;
- Fig. 10: shows another functional block diagram for generating a scenery signal; and
- Fig. 11: shows still another functional block diagram for generating an effect signal.

In the following a "video game" is to be understood as an electronic game that involves interaction with a user interface to generate visual feedback on a display device 14 such as a TV screen or computer monitor. The term "video" traditionally refers to a raster display device 14, but nowadays implies any type of display device 14 capable of producing two-dimensional or three-dimensional images.

Electronic systems used to play video games are also known as platforms. Examples of these platforms are personal computers and video-game consoles. These platforms range from large main frame computers to small hand held computing devices.

Input devices used for games, so-called game controllers, vary across the platforms. Common controllers include game pads, joy sticks, mouse devices, keyboards, touchscreens of mobile devices, or even a person's body with the help of Kinect sensors.

Players, i.e. gamers,12 typically view the video game on a video screen, television, or computer monitor. Alternatively virtual reality head-mounted display goggles may be used.

Sound effects, music, and voices of the game come from loudspeakers or head phones. Some games include haptic, vibration-creating effects, force-feedback peripherals and virtual reality headsets.

The present concept is operable with each of these.

Playing video games is also referred to as "eSports". The term "eSports" is an abbreviation for electronic sports. These sports are video game competitions played most by professional players individually or in teams and gained popularity from the late 2000s. The present concept is particularly direct to professional gamers.

The most common challenges in eSports are fighting, first-person shooters, multiplayer online battle arena, and real-time strategy. There are certain games that are made for just competitive multiplayer purposes. With those types of games, players focus entirely on choosing the right character or obtaining the right equipment in the game to help them when facing other players. Tournaments are held so that people in the area or from different regions can play against other player of the same game and see who the best is.

Examples of the multiplayer online battle arena (MOBA) games are "Dota 2" and "League of Legends". An exemplary first-person shooter game is "Counter Strike". Other games with significant earnings include "Call of Duty ", "Heros of the Storm", "Hearthstone", "Overwatch", and "StarCraft II".

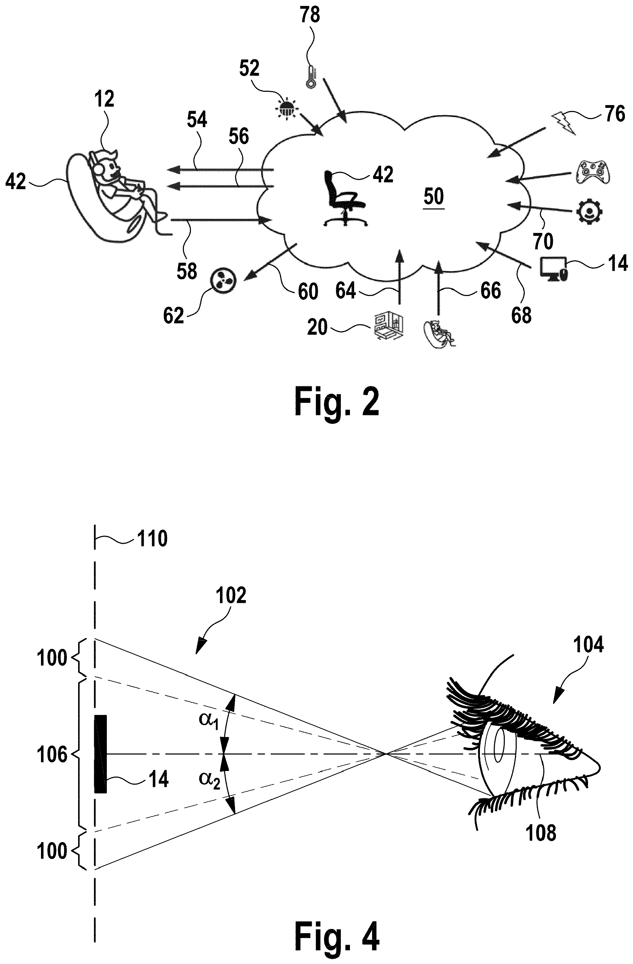

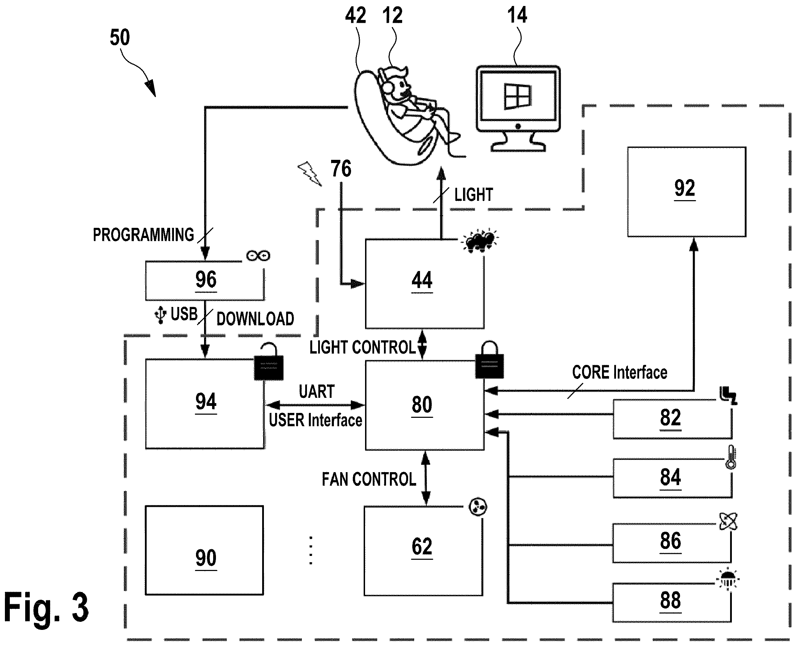

The system 50 (cf. Figs. 2 and 3) of the present invention is designed for this type of video games.

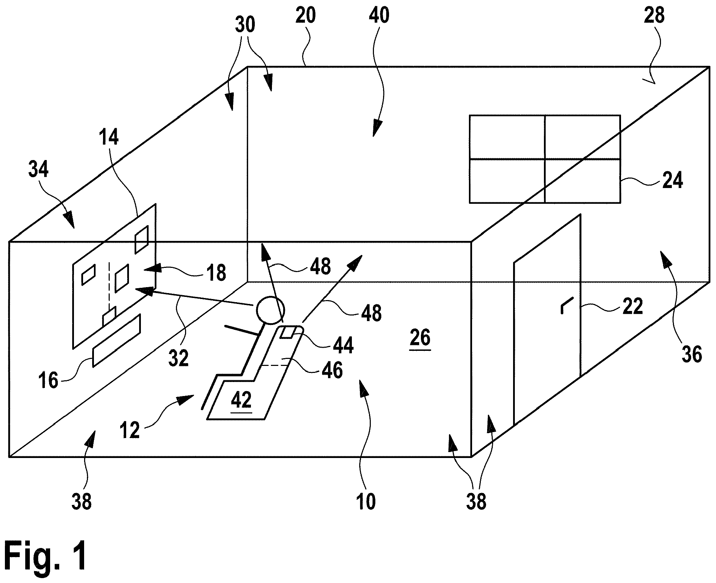

Referring now to Fig. 1 an exemplary environment 10 is shown in which one or more users (hereinafter simply called "gamers") 12 are playing a video game on an (external) video-gaming device, such as a game console connected to an external display device 14 (e.g., computer monitor, TV screen, and the like), a desk top or lap top computer (e.g., PC), or any other video-gaming machine. The video-gaming device further includes an (external) data-processing unit 16 providing a (video) signal to the display device 14 for displaying an image 18 of the video game to the gamer 12.

For example, the environment 10 is a room 20 in a building (not shown). The room 20 may comprise a door 22, and one or more (not shown) windows 24. Further, the room 20 comprises a floor 26, a ceiling 28, and one or more walls 30. In Fig. 1, the room 20 exemplarily has four walls 30. With regard to a line of vision 32 of the gamer 12, who is exemplarily orientated as in Fig. 1, the walls 30 include: a front wall 34, a rear wall 36, a left wall 38, and a right wall 40. It is clear that the room 20 may comprise less than four of the walls 30.

In general, the environment 10 refers to the physical surroundings of the gamer 12 in the real world, i.e. an actual region of space, as supposed to the virtual world of the video game.

The gamer 12 is sitting on a gaming seat 42. The seat 42 comprises an illumination unit 44, which is only schematically indicated in Fig. 1 in a head rest 46 of the seat 42 for illuminating the room 20 (cf. arrows 48), and in particular a peripheral field of view 102, as will be explained in more detail below.

Fig. 2 shows a schematic diagram of a system 50 for enhancing perception of the images 18 of the video game. Further, Fig. 2 illustrates information and parameters which may be used for enhancing the gamer's 12 perception.

These information and parameters may include at least one of: ambient light 52 (e.g., light from the window 24, door 22, display device 14, and/or illumination unit 44); gaming light 54 (i.e. light from the display device 14); information on game events (as mentioned above); seating-status and information 58 on gamer's 12 movement(s); signals 60 for controlling a seat fan 62; room specifications 64 (such as size of walls, distance of the gamer 12 relative to walls 30, light, and the like); gamer's specification 66 (e.g., gamer's size, seat height, and the like); information 68 on at least one of color and brightness of the image 18 on the display device 14; information 70 on gamer tools 72 (e.g., joy pad, joy stick, keyboard, mouse, etc.); information 74 on game situation; temperature 78; and power supply 76.

Hence, the system 50 interacts with the environment 10 and other systems such as the data-processing unit 16 delivering the video signals being displayed on the display device 14.

Fig. 3 schematically illustrates architecture of the system 50. Fig. 3 shows a block diagram of components and sensors which form the system 50, and which may be integrated into the gaming seat 42. Each of the components may be implemented by hardware and/or software. The components are surrounded by a broken line in Fig. 3.

The system 50 comprises: the seat 42; the illumination unit 44; and a (central) control unit 80 (e.g., a core processor). The illumination unit 44 and the control unit 80 are integrated into a casing of the gaming seat 42.

The system 50 may further comprise at least one of: a seating-status sensor 82; a temperature sensor 84; an acceleration sensor 86 (e.g., a gyro sensor); and an ambient-light sensor 88. Preferably, each of the sensors 82 to 88 is integrated into the gaming seat 42. Each of the sensors 82 to 88 may communicate directly with the control unit 80.

The system 50 may further comprise the fan 62.

Even further, the system 50 may comprise one or more batteries, or electric accumulators 90, which may supply energy, instead of the external power supply 76 in a seat-autonomous manner.

Moreover, the system 50 may comprise an interface 92 for communicating with the external data-processing unit 16, preferably in a wireless manner.

Still further, the system 50 may comprise an (optional) user processor 94 which is configured to receive user-specific programs via a corresponding user interface 96.

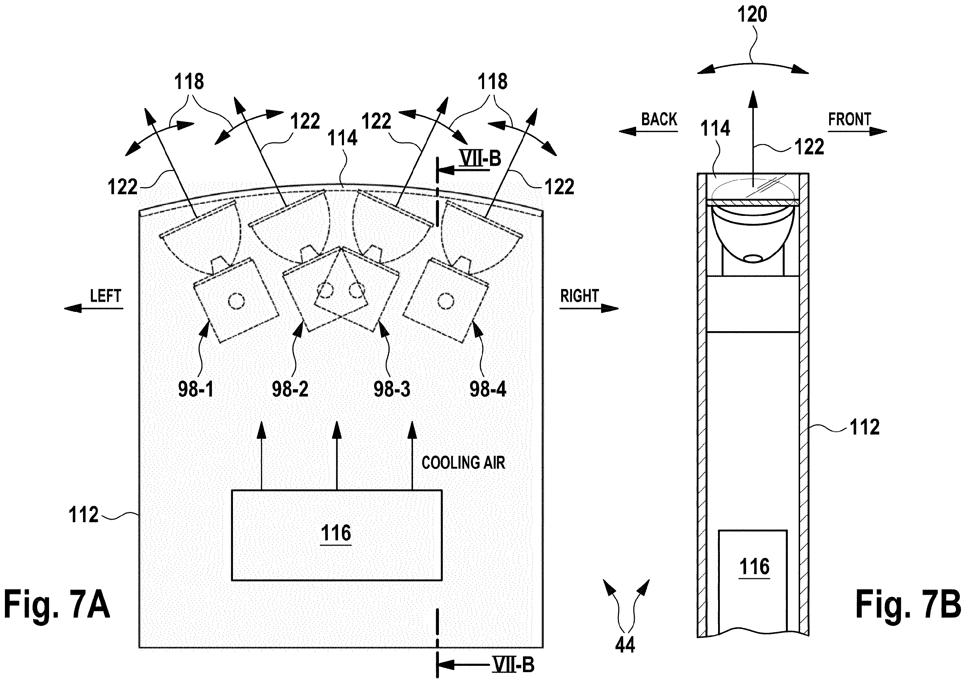

The illumination unit 44 may comprise one or more luminaires 98 (cf. Fig. 7 shown), as will be explained in more detail below. For example, the luminaires 98 can be implemented by RBGW LEDs. The luminaires 98 may be orientated individually. In particular, the luminaires 98 emit light, at least partially into the gamer's 12 peripheral field of view 100, as will be explained with reference to Figs. 4 to 6.

Fig. 4 schematically illustrates an overall field of view 102 of the gamer's 12 eye 104. The field of view 102 is divided into a main field of view 106 and the peripheral field of view 100.

In general, the "field of view" 102 is what the gamer 12 sees if the gamer 12 looks straight on the display device 12 when the gamer 12 holds its head straight. The field of view 102 includes everything imaged onto the inside of the retina of the gamer's 12 eye 104, wherein it does not matter whether the gamer 12 recognizes sharply the objects seen. Even the surroundings perceived by the gamer 12, but not recognized sharply, belong to the field of view 102.

Further, it is distinguished between a respective "monocular" field of the right and left eyes 104, and a "binocular" field of view 102 of both eyes 104. For adults, horizontal extension (of both eyes 104 in common) is about 180°-200°, wherein the vertical extension is about 60 °to the top (alpha 1) and 70° to the bottom (alpha 2). Towards an outer edge, the perception reduces to moving objects. Pattern recognition is no longer possible in this region. This outer peripheral region of the field of view 102 is also called "peripheral field of view" 100.

The main field of view 106 extends centrally around an optical axis 108 of the eye 104. The optical axis 108 is perpendicular to an object plane 110. The peripheral field of view 100 is arranged adjacent to the main field of view 106. The peripheral field of view 100 also represents the outer region of the gamer's 12 perception, wherein the main field of view 106 represents the inner region of the gamer's 12 perception.

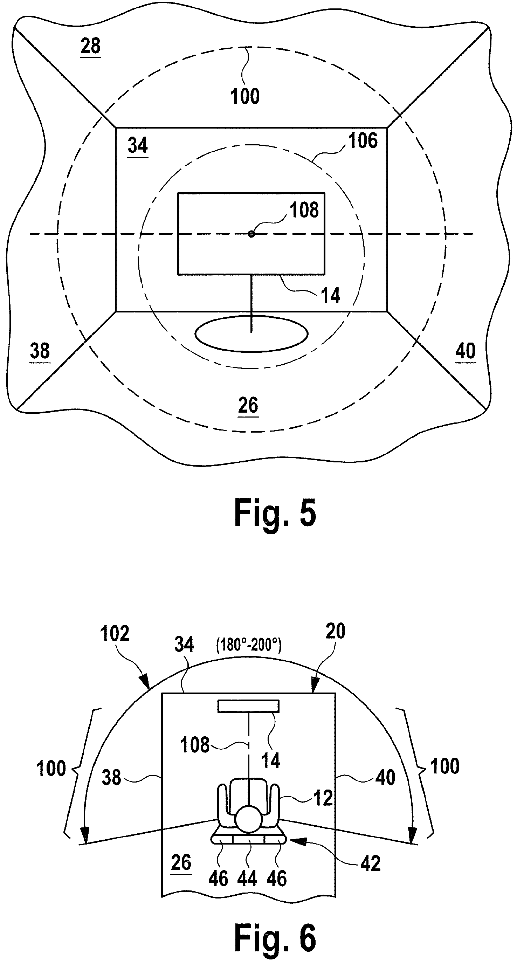

In normal use, the display device 14 is positioned centrally in the main field of view 106 of the gamer 12. In this state, the gamer 12 normally sits directly in front of the display device 14 (cf. Fig. 6). This means that the optical axis 108 is substantially perpendicular to a surface of the display device 14. This angle of 90° might slightly vary dependent on the height of the display device 14 relative to the height of the eye of the gamer 12.

Under normal circumstances, therefore, the gamer 12 will recognize everything displayed on the display device 14 in the main field of view 106, but also perceive (without recognizing every detail) the peripheral field of view 100. In particular, the gamer 12 will perceive parts of the floor 26, ceiling 28, the left wall 38, and the right wall 40. These parts almost have an identical distance to the front wall 34 like the gamer 12. Nevertheless the gamer 12 is able to distinguish between light moods and effects occurring on at least one of the left wall 38, the right wall 40, and the ceiling 28. This is of particular relevance for communicating events to the gamer 12 during gameplay, i.e. in real time.

Fig. 5 shows the room 20 from the perspective of the gamer 12 who is sitting on the gaming seat 42 such that the optical axis 108 (cf. Fig. 4) of the gamer 12 is centered on the screen of the display device 14. As shown in Fig. 5, the display device 14 is positioned centrally within the main field of view 106 of the gamer 12. However, the gamer 12 is nevertheless able to perceive parts of the floor 26, the ceiling 28, the left wall 38, and the right wall 40, which parts are close to the position of the gamer 12, as indicated in Fig. 6 which shows a top view of the relative positioning of the gamer 12 and the display device 14 within the room 20.

Fig. 6 illustrates the horizontal field of view 102 having an angle of about 180 to 200°. The horizontal field of view (180-200°) has a substantially larger extension than the vertical field of view (about 130°).

As a result, the gamer 12 can perceive even parts of the left and right walls 38 und 40 which are located "behind" the gamer 12 sitting on the seat 42. As shown in Fig. 6, the gamer 12 is positioned such that the gamer 12 is located between the screen of the display device 14 and the illumination unit 44.

Please note that Figs. 4 to 6 are not depicted by the same scale. Figs. 4 to 6 are for illustrating purposes only.

Fig. 7 shows an exemplary illumination unit 44 in a partially broken rear view (Fig. 7A) and in a sectional view (Fig. 7B) along line VII-B - VII-B in Fig. 7A. The exemplary illumination unit 44 of Fig. 7 will be explained with common reference to the Figs. 7A und 7B.

In general the illumination unit 44 comprises one or more luminaires 98. The illumination unit 44 of Fig. 7 comprises, for example, four luminaires 98-1 to 98-4. The illumination unit 44 may further comprise a casing 112, preferably made of aluminum. The casing 112 is open in an upper section of the illumination unit 44. The corresponding opening may be covered by a translucent cover 114.

The illumination unit 44 may further be provided with one or more fans 114 supplying cooling air to the luminaires 98.

The casing 112 is dimensioned such that it fits into, for example, the head rest 46 of the gaming seat 42, preferably in a positively engaged manner. The shape of the cover 114 may be adapted to an upper part (not shown) of the head rest 46 so that the surface of the head rest 46 and the cover 114 are flush aligned.

The luminaires 98 may be RBGW LEDs. The luminaires 98 may be installed pivotally from left to right (cf. arrows 118 in Fig. 7A), and/or from back to front (cf. arrow 120 in Fig. 7B) for optimally adjusting the radiation directions 122 of the luminaires 98. It is clear that each of the luminaires 98 emits light in a cone (not shown), an axis of which is represented by the radiation direction 122. The opening angle of the cone may vary dependent on a type of the luminaire 98 used.

In Fig. 7A the luminaires 98-1 and 98-2 are orientated towards the left hand side of the field of view 102 (not shown), wherein the luminaires 98-3 and 98-4 are orientated towards the right hand side of the field of view 102. It is to be noted that the illumination unit 44 is arranged relatively close to the head (not shown) of the gamer 12 so that the orientations of the luminaires 98 match the gamer's 12 perception in the gamer's 12 field of view 102.

Further, it is clear that each of the luminaires 98 may be orientated differently with respect to the others. For example, at least one of the luminaires 98-2 and 98-3 may be orientated vertically, wherein one of the luminaires 98-2 and 98-3 might be directed to the front and the other to the back.

Normally, the luminaires 98 are orientated and adjusted mechanically at the time of assembly of the seat 42. However, the orientation of each of the luminaires 98 may be adjusted (electronically) over time (and dependent on the video signal from the display device 14). In this case, each of the luminaires is individually controllable (via the control unit 80) and comprises a dedicated actuator (not shown) for orientating the respective radiation direction 122.

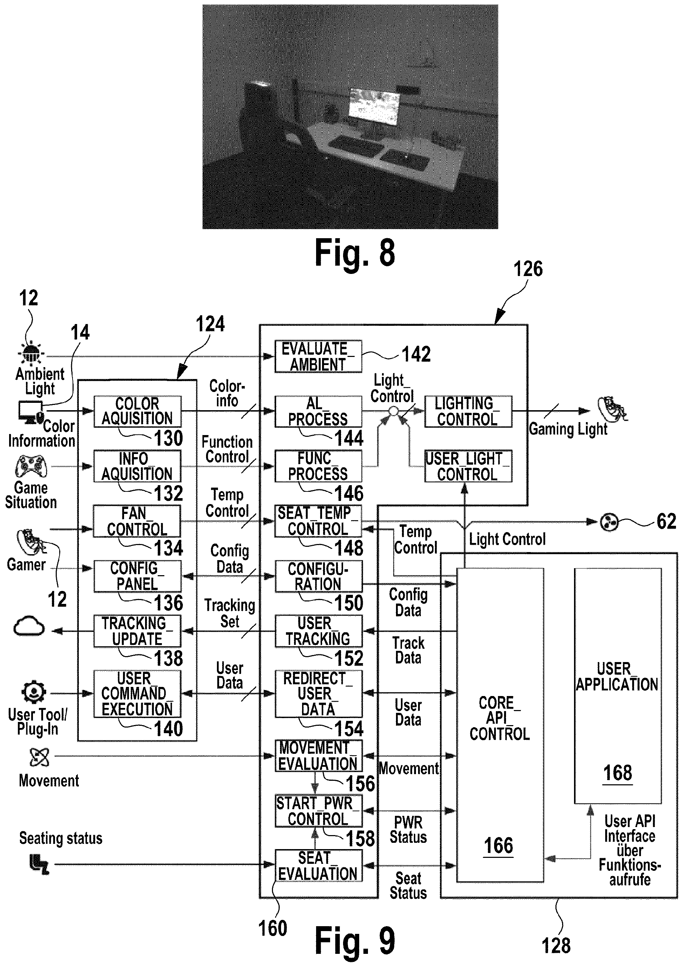

Fig. 8 shows a perspective view of the room of Fig. 1. Fig. 8 further shows that the illumination unit 44 is flush integrated into the head rest 46 of the gaming seat 42. The illumination unit 44 (and the luminaires 98 thereof) are orientated such that the ceiling 28, the front wall 34, as well as the left and right walls 38 und 40 are illuminated, in particular the peripheral field of view 100 (not shown).

Referring back to Fig. 3, the seating-status sensor 82 is configured for detecting whether or not the gamer 12 is sitting on the seat 42.

The acceleration sensor 86 is configured for monitoring movements of the gamer 12, and (optionally) for verifying the presence of the gamer 12 on the seat 42. Additionally, the sensor 86 may detect the relative position of the user (e.g., working, relaxing, and the like),

The ambient-light sensor 88 detects the relevant ambient light 52. External light sources, such as the door 22 open, and day light from the window 24, can be detected. Further, light emitted from the display device 14 may be detected. The ambient-light sensor 88 is suitably positioned on the seat 42.

The user processor 94 can be programmed by the gamer 12 itself.

The interface 92 receives the video signal from the external display device 14, or from the unit 16, and forwards the video signal for further processing to the control unit 80. The video signals may be transmitted via a line (not shown) or wirelessly (e.g., via USB, Bluetooth Low Energy, and the like).

Fig. 9 shows a block diagram for explaining functions being performed by the components of the system 50 depicted in Fig. 3.

In Fig. 9, the data-processing unit 16 of Fig. 1 is represented by a block 124. For facilitating the explanations, in the following the data-processing unit 16 exemplarily is a PC. The control unit 80 of Fig. 3 is represented by a block 126. The user processor 94 is represented by a block 128. The blocks 124, 126, and 128 communicate with each other as indicated by arrows.

The block 124 may include at least one of the following functions: color acquisition 130; info acquisition 132; fan control 134; configuration panel 136; tracking update 138; and user command execution 140.

The block 126 may comprise at least one of the following functions: evaluate ambient light 142; ambient light process 144, function process 146; seat temperature control 148; configuration 150; user tracking 152; redirecting user data 154; movement evaluation 156; start power control 158; seat evaluation 160; lighting control 162; and user light control 164.

The block 128 may include the following functions: core API control 166; and user application 168.

The function 130 ("color acquisition") captures the information 68 on color displayed on the display device 14, dependent of the executed video game or program. This function may capture respective the color information 68 of a predetermined number of zones (not shown), wherein the number of zones is preferably equal to the number of luminaires 98. For instance, four zones are defined in the video data of the display device 14.

Preferably, these four zones are located in an upper section of the image 18 displayed according to the video game. The upper section of the image 18 usually represents the environment within the video game. For example, the upper section of the image 18 might be an open sky, the ceiling of a building, the ceiling of a cave, or the like. With other words, the zones are representative for the environment of the game, i.e. current scenery of the video game. For example, if the avatar of the gamer 12 walks into a cave, the mood of the scenery becomes darker than outside the cave. The zones detect this darkening and result in corresponding color information. This information on color is transmitted to the "ambient light process" 144 for further processing, as will be explained below.

The function 132 ("info acquisition") monitors the active video game, and generates events therefrom. A possible event may be: an enemy approaching from the left or the right; the gamer dies; the gamer is rewarded; or the like. This information on one or more events in the video game is transmitted to the control unit 80, and in particular to the block 146.

The block 146 converts the information on one or more events into an effect signal which is used by the block 162 for controlling the illumination unit 44, and in particular the individual luminaires 98.

For example, the information that the gamer has died in the video game might be converted into flashes of red light. If, as another example, an enemy approaches from the right, one or more of the luminaires 98 might be activated such that the right hand side of the peripheral field of view 100 is illuminated in red. If a friend approaches from the left, the left hand side-peripheral field of view might be illuminated in blue or green, preferably at the same time.

In contrast to the information 68 on colors (and/or brightness), which is converted into a scenery signal for generating the real world scenery which is displayed continuously according to the current scene of the video game, the effect signal may interrupt the mood generated by the scenery signal of the block 144.

The information on one or more events is transmitted, for example, by a signal "FunctionControl" from the block 132 to the block 164.

The block 134 ("fan control") allows regulation of the temperature of the gaming seat 42 by the gamer 12. The gamer 12 may set a specific (target) temperature of the gaming seat 42 via the PC, wherein a corresponding signal ("TempControl") is transmitted by the block 134 to the block 148. The block 148 generates a signal for controlling the seat fan 62.

The block 136 ("config panel") allows the gamer 12 to read out the currently configured parameters and/or values for amending such parameters and/or values which are relevant. For example, the values are read at the beginning of the configuration and then updated.

The block 138 ("tracking update") allows transmission of protocol data achieved by the gaming seat 42, wherein the corresponding data can be uploaded to the manufacturer of the gaming seat 42.

The block 140 ("user command execution") represents an interface for a user-dedicated program. User software including arbitrary values can be transmitted via this interface to the block 128 (i.e. the user processor 94).

The blocks 166 ("core api control") and 168 ("user application") of the block 128 represent middleware to the control unit 114 and a user application, respectively. The block 166 is used for unpacking and packing data. Implementation of this function is provided, for example, by a library.

The block 144 ("ambient light process") within the block 126 ("control unit 80") receives information on at least one of color and brightness (i.e. "color information") for determining corresponding color and brightness values, preferably for each of the luminaires 98. The color and brightness values for each of the luminaires 98 may be controlled dependent on the current ambient light 52. Corresponding information might be supplied by the block 142 ("evaluate ambient").

The block 144 may further be configured to avoid abrupt color changes, and to ensure continuous color changes, for example, by means of suitable fading algorithms.

The function of the block 144 ensures a consistent light intensity, even if the ambient light 52 changes.

The block 144 is configured to generate a corresponding scenery signal within real time, preferably in less than 15 ms. The ambient light process of the block 144, which generates the scenery signal from the information 68 on at least one of color and brightness (from the zones in the image 18) is used for generating a continuous mood light which reflects the current environment in the video game.

The block 146 receives the information on one or more events from the block 132. The block 146 converts the information on one or more events into an effect signal which is used for light control. The block 146 may be configured to generate a desired output for the illumination unit 44, for example, in terms of a sequence of effects.

The block 146 verifies corresponding commands and outputs the desired light effects. Preferably, only short (effect) interruptions are generated in the overall mood. The light effect might be transmitted individually to any of the luminaires 98.

The block 162 ("lighting control") directly controls the illumination unit 44, in particular the luminaires 98 thereof. For controlling the illumination unit 44, the function 162 receives at least one of the scenery signal and the effect signal.

The block 162 may consider parameters such as dimming targets, dimming colors, dimming duration, and dimming priority. Execution may happen in terms of, for example, "dim the luminaire 98-3 within four seconds to value 18".

The block 162 may include a buffer for recording a sequence of dimming commands in order to allow a continuous processing.

The block 162 receives signals from one or more sources. For this reason, priorizations might be advisable.

The block 162 may also be configured for ensuring color and brightness fidelities. Calibration course may be taken into account.

The block 148 ("seat temp control") controls the connected fan(s) 62 in accordance with preset values.

The block 156 ("movement evaluation") monitors the acceleration sensor 86. Data filtered from, for example, movement of the gamer 12 can be processed and provided to other ones of the functions.

The block 158 ("start power control") controls booting and startup processes.

The block 164 ("user light control") receives commands or sequences of commands from the user software, which might be embedded, and controls the illumination unit 44 correspondingly.

The block 150 ("configuration") holds current configuration parameters and provides the same to other functions. Possible parameters may be: a height of the room 20; a width of the room 20; respective distances of the gamer 12 relative to the left, right, front and rear walls; color of a respective wall 30; body size of the gamer 12; a height of the seat 42; and a number of luminaires 98.

The block 160 ("seat evaluation") monitors the sensors installed in the seat 42 for determining presence or absence of the gamer 12.

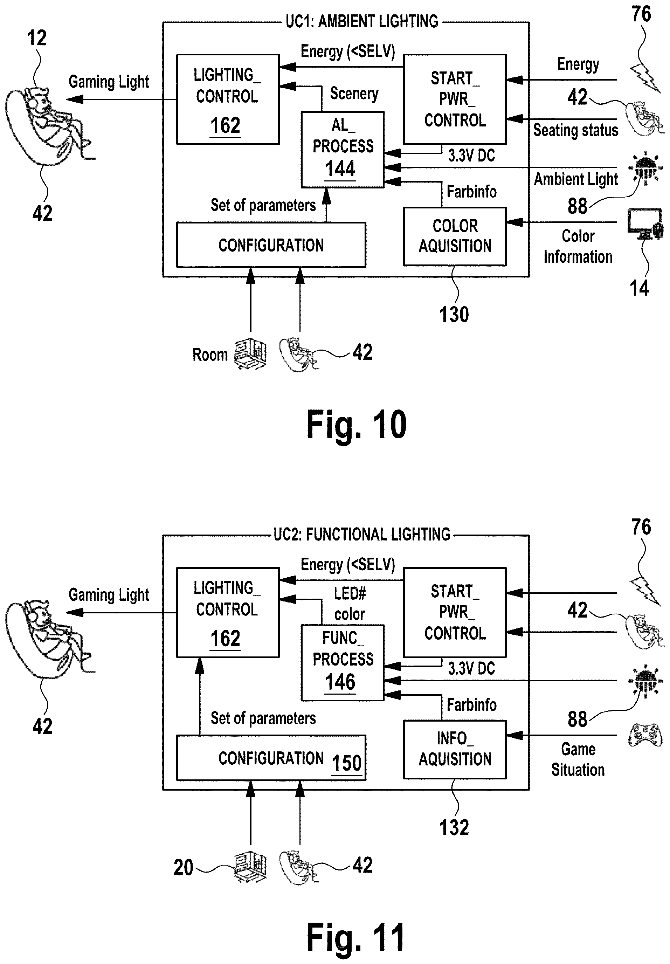

Fig. 10 illustrates a block diagram for generating the scenery signals.

The gamer 12 intends to dive into the world of the video game. For boosting the perception of the gamer 12, the system 50 changes the (real) environment of the gamer 12 dependent on the current colors in the video game. The block 144 receives information from at least one of: the ambient-light sensor 88; the color-acquisition block 130 (i.e. the information on at least one of color and brightness); and the configuration block 150 specifying the room 20 as (e.g., size of the room 20, light in the room 20, etc.) and the gamer 12 (e.g., body size, seat height, etc.). The block 144 uses this input to determine the color (and mood) on the screen of the display device 14 which depends on the current scenery of the video game, for calculating a suitable scenery signal. A corresponding scenery signal is than output to the lighting-control block 162 which in turn controls the illumination unit 44.

The parameters provided by the configuration block 150 may be used for optimizing the illumination and display of the mood light (i.e. scenery light).

Fig. 11 illustrates a block diagram for generating the effect signals.

The block 146 receives information 74 on one or more events from the info acquisition block 132 for generating the effect signal, which in turn is forwarded to the lighting control block 162. The lighting control block 162 may additionally receive information from the configuration block 150, so that the event effect (e.g., event light) may be based on the information on one or more events, and on parameters of the room 20 and the gamer 12.

**List of reference numerals:**

| | | | |
|---|---|---|---|
| 10 | environment | 72 | gamer's tool |
| 12 | user/gamer | 74 | information on game situation |
| 14 | display device | 76 | (external) power |
| 16 | data-processing unit | 78 | temperature |
| 18 | image | 80 | control unit |
| 20 | room | 82 | seating-status sensor |
| 22 | door | 84 | temperature sensor |
| 24 | window | 86 | acceleration sensor |
| 26 | floor | 88 | ambient-light sensor |
| 28 | ceiling | 90 | battery/accumulator |
| 30 | wall | 92 | I/O |
| 32 | line of vision | 94 | user processor |
| 34 | front wall | 96 | user I/O |
| 36 | rear wall | 98 | luminaire |
| 38 | left wall | 100 | peripheral field of view |
| 40 | right wall | 102 | overall field of view |
| 42 | gaming seat | 104 | human eye |
| 44 | illumination unit | 106 | main field of view |
| 46 | head rest | 108 | optical axis |
| 48 | arrows | 110 | object plane |
| 50 | system | 112 | casing of 44 |
| 52 | ambient light | 114 | cover |
| 54 | gaming light | 116 | fan |
| 56 | game information | 118, 120 | arrows |
| 58 | seating status/movement | 122 | radiation direction |
| 60 | control signal for 62 | 124 | block of 16 |
| 62 | seat fan | 126 | block of 80 |
| 64 | room specification | 128 | block of 94 |
| 66 | gamer's specification | 130 | color acquisition |
| 68 | information on color and/or brightness | 132 | info acquisition |
| 70 | information on | 134 | fan control |
| 136 | config panel | | |
| 138 | tracking update | | |
| 140 | user command execution | | |
| 142 | evaluate ambient | | |
| 144 | ambient light process | | |
| 146 | function process | | |
| 148 | seat temperature control | | |
| 150 | configuration | | |
| 152 | user tracking | | |
| 154 | redirecting user data | | |
| 156 | movement evaluation | | |
| 158 | start power control | | |
| 160 | seat evaluation | | |
| 162 | lighting control | | |
| 164 | user light control | | |
| 166 | core api control | | |
| 168 | user light control | | |

## Claims

1. A system (50) for boosting perception of an image (18) of a video game, in a color-dependent and/or brightness-dependent manner, which video game runs on an external data-processing unit (16), wherein the image (18) of the video game is displayed to a gamer (12) of the video game within a room (20) via an external display device (14) connected to the external data-processing unit (16) for exchanging data, wherein the system (50) comprises:
a, in particular, gaming seat (42);
a, preferably energy self-sufficient, illumination unit (44) including at least one luminaire (98), wherein the illumination unit (44) is integrated into the gaming seat (42), in particular into a head rest (46) of the seat (42), wherein the illumination unit (44) is configured to illuminate both a main field of view (106), in which the display device (14) is positioned, and a peripheral field of view (100) of the gamer (12) in a manner which is perceptible for the gamer (12) who is positioned between the illumination unit (44) and the display device (12) while looking at the display device (12) ; and
a control unit (80) configured for performing the steps of:
receiving, from the external data-processing unit (16), information (68) on at least one of a color and brightness of current scenery of the video game;
converting the received information on at least one of color and brightness into a scenery signal for the illumination unit (44) so that at least the peripheral field of view (100) is illuminated corresponding to the current video game scenery; and
controlling the illumination unit (44) by the scenery signal.

2. The system of claim 1, wherein the control unit (80) is further configured to perform the step of:
scaling the received information (68) on color to a color spectrum being displayable by the illumination unit (44).

3. The system of claim 1 or 2 further comprising an ambient-light sensor (88) which is configured to detect an intensity of an ambient light (52) within the room (20) where the illumination unit (44) is located, wherein the control unit (80) is further configured to perform the steps of:
receiving the intensity of the ambient light (52) by the ambient-light sensor (88);
controlling at least one of color value and brightness value of the illumination unit (44) based on the received intensity of the ambient light (52), in particular by means of a fading algorithm, so that a continuous color change at a constant light intensity is achieved, in particular during changing ambient-light conditions in the room (20).

4. The system of any of claims 1 - 3, wherein the control unit (80) is further configured to perform the following steps of:
receiving information on one or more events in the video game from the external data-processing unit (16);
converting the information on one or more events into an effect signal, in particular for short duration instead of the scenery signal.

5. The system of any of claims 1 - 4, where at least one of the scenery signal and an effect signal respectively comprise at least one of the following control parameters: dimming target; target color, dimming duration; and dimming priority.

6. The system of any of claims 1 - 5, wherein the illumination unit (44) comprises several luminaires (98), wherein each of the luminaires is controllable separately, and wherein the luminaires are orientated towards the peripheral field of view (100), in particular for displaying effect signals to the gamer (12), preferably in a spatially distinguishable manner.

7. The system of any of claims 1- 6, wherein the scenery signal is generated based on the information (68) on at least one of color and brightness, and additionally based on at least one of the following parameters: room height, room widths; respective distance of the gamer (12) relative to left, right, front and rear walls (38, 40, 34, 36); respective wall color; gamer's (12) body size; seat height; and number of luminaires.

8. The system of any of claims 1 - 7, wherein the seat (42) further comprises:
a battery (90); an electric accumulator (90); a fan (62, 116); an interface (92) for the information to be received; a seating-status sensor (82); a temperature sensor (84); and an acceleration sensor (86).

9. The system of any of claims 1 - 8, wherein the control unit (80) further comprises a gamer-programming interface (96) for gamer-generated programs.
